# EUROPEAN PATENT SPECIFICATION

(11) **EP 0 437 176 B1**
(45) Date of publication and mention of the grant of the patent: **09.03.1994**
(21) Application number: 90810929.1
(22) Date of filing: 28.11.1990
(51) Int. Cl.: B23Q 39/04, B23P 21/00

(54) **Machine with intermittently rotary workpiece-holding table for working and assembly of high-precision pieces**
Maschine mit schrittweise drehendem Werkstücktisch für Bearbeitung und Montage an hochpräzisen Werkstücken
Machine avec rotation pas à pas de la table porte pièce pour le travail sur et assemblage de pièces de haute précision

(30) Priority: 12.01.1990 CH 99/90
(43) Date of publication of application: 17.07.1991
(73) Proprietor: MIKRON S.A., CH-6982 Agno (CH)
(72) Inventor: Buzzi, Ugo, CH-6864 Arzo (CH); Borlin, Giulio, I-21022 Azzate (IT)
(74) Representative: Baggiolini, Raimondo

(56) References cited:
- EP-A- 0 070 256
- EP-A- 0 083 304

## Description

This invention has as its object a intermittently rotary workpiece-holding table for working and assembly of high-precision pieces.

From the EP-A-0083304 it is known a machine with an intermittently rotary workpiece-holding table for working and assembly of high-precision pieces, comprising operating units placed above, below and laterally with respect to the rotary table, the control of the advances of the operating units with vertical axes coming about by levers controlled by elements which in turn are driven by a cam having opposite profiles so as to control said elements in the opposite direction.

The machine according to the present invention differs from the cited prior art in that, in order to vary the curve representing the relationship between the advance of said operation units and the angular movement of the cam during a single complete stroke, two fulcrum for each lever are provided, the first one, being used in a first and last work phase, the second one being used in a second work phase.

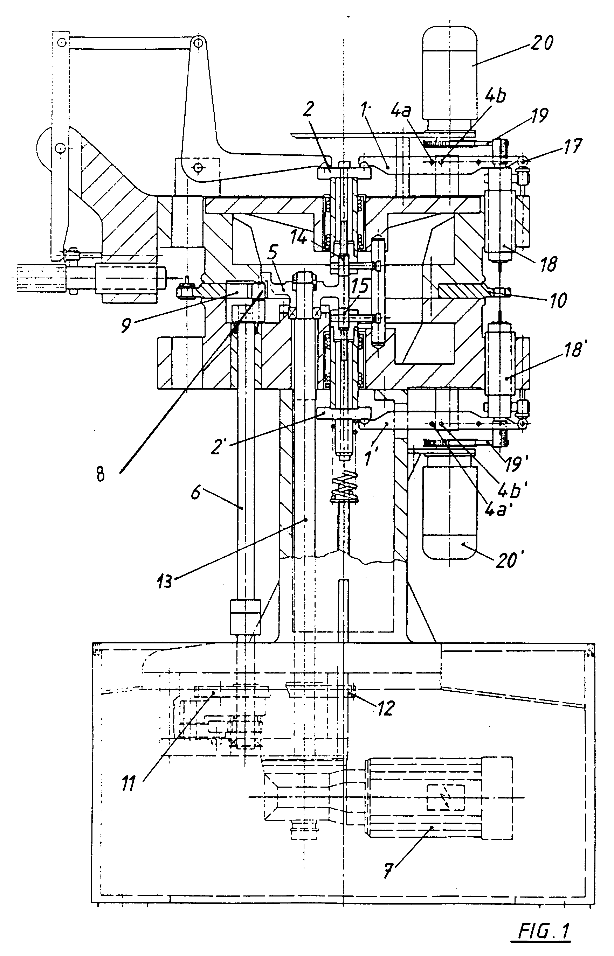

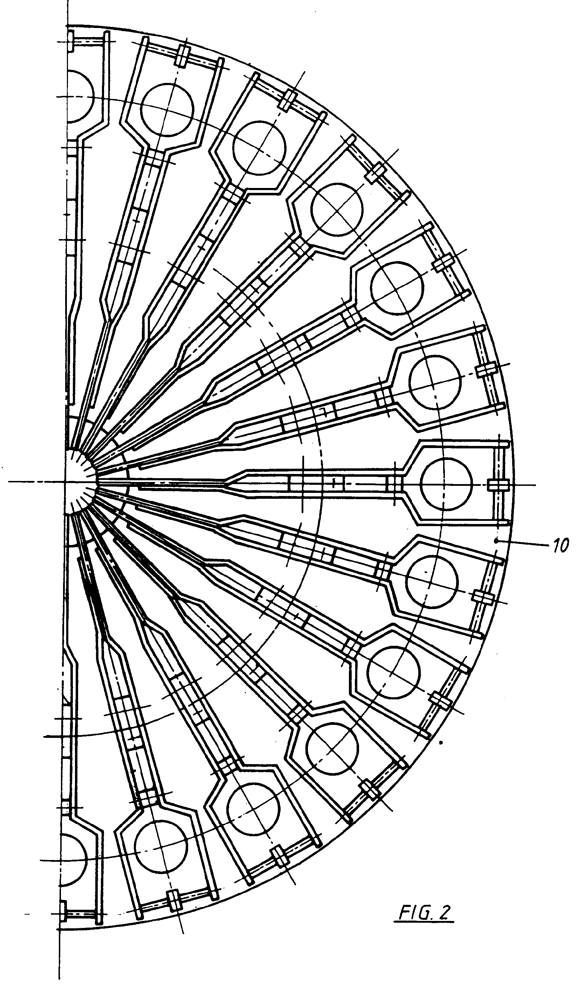

The accompanying drawings (figg. 1, 2, 3, 4, 5) represents a preferred nonlimiting embodiment of the machine according to the present invention.

Shaft 6 (fig. 1), connected to motor 7 by gears 11 and 12, controls Maltese cross device 8, 9 which transforms the continuous rotary movement into an intermittent movement to drive workpiece table 10. A second shaft 13 integral with motor 7 carries a cam 5 which drives disks 2 and 2' by rollers 14, 15.

Cam 5 exhibits two opposite profiles so that disks 2,2' are moved in opposite direction.

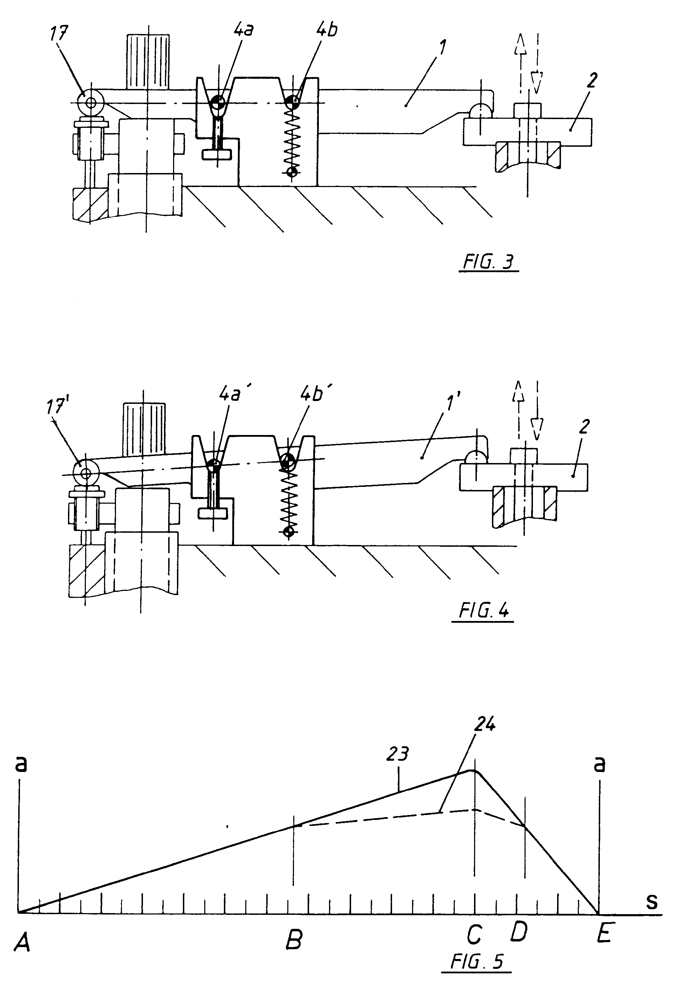

Said disks act on levers 1, 1' which in turn control, by pawls 17, 17' (see also figures 3 and 4), the operating units with vertical axes 18, 18'. Operating units 18, 18' in turn are driven by belts 19, 19' by motors 20, 20' or can be equipped with incorporated motors. The extent of the advances can be varied individually for each operating unit, by moving fulcrums 4a, 4a' - 4b, 4b' of levers 1,1'.

For the efficient use of said machine, it is provided to vary curve 23 (fig. 5) which represents advance "a" of the work units, with respect to angular movement "s" of cam 5 (fig. 1), in curve 24, by using in a first and last work phase (AB-DE, fig. 5) first fulcrum 4a, 4a' and in a second work phase (BD) a second fulcrum 4b, 4b' of said levers 1, 1', while the first fulcrum is removed from its support.

## Claims

1. Machine with an intermittently rotary workpiece-holding table (10) for working and assembly of high-precision pieces, comprising operating units (18,18') placed above, below and laterally with respect to the rotary table (10), the control of the advances of the operating units (18,18') with vertical axes coming about by levers (1,1') controlled by elements (2,2') which in turn are driven by a cam (5) having opposite profiles so as to control said elements (2,2') in the opposite direction, characterized in that, in order to vary the curve (23) representing the relationship between the advance (a) of said operation units (18,18') and the angular movement (s) of the cam (5) during a single complete stroke, two fulcrum (4a, 4b), respectively (4a', 4b') for each lever (1, 1') are provided, the first one (4a,4a') being used in a first and last work phase (AB-DE fig. 5), the second one (4b,4b') being used in a second work phase (BD).

## Patentansprüche

1. Maschine mit einem schrittweise drehenden Werkstücktisch (10) für Bearbeitung und Montage an hochpräzisen Werkstücken, umfassend oberhalb, unterhalb und seitlich bezüglich des drehenden Tisches (10) angeordnete Arbeitseinheiten (18,18'), wobei die Steuerung der Vorschübe der Arbeitseinheiten (18,18') mit vertikalen Achsen durch Hebel (1,1') bewirkt wird, die durch Elemente (2,2') gesteuert werden, die wiederum von einem Nocken (5) angetrieben werden, der entgegengesetzte Profile aufweist, so daß er die Elemente (2,2') in entgegengesetzte Richtungen steuert, dadurch gekennzeichnet, daß zum Variieren der Kurve (23), die das Verhältnis zwischen dem Vorschub (a) der Arbeitseinheiten (18,18') und der Winkelbewegung (s) des Nockens (5) während eines einzelnen vollständigen Hubes verkörpert, zwei Drehpunkte (4a,4b) bzw. (4a', 4b') für jeden Hebel (1,1') vorhanden sind, wobei der erste (4a, 4a') in einer ersten und letzten Arbeitsphase (AB-DE in Fig. 5), der zweite (4b,4b') in einer zweiten Arbeitsphase (BD) verwendet wird.

## Revendications

1. Machine avec table porte-pièce (10) à rotation pas à pas pour le travail et l'assemblage de pièces de haute précision, comprenant des ensembles de manoeuvre (18,18') placés au-dessus, au-dessous et latéralement par rapport à la table tournante (10), la commande de l'avance des ensembles de manoeuvre (18,18') à axes verticaux s'effectuant par des leviers (1,1') commandés par des éléments (2,2') qui sont à leur tour entraînés par une came (15) présentant des profils opposés de façon à commander les dits éléments (2,2') en directions opposées, caractérisée en ce que, pour faire varier la courbe (23) représentant la relation entre l'avance (a) des dits ensembles de manoeuvre (18,18') et le déplacement angulaire (s) de la came (5) pendant une seule course complète, deux pivots (4a,4b) (4a',4b') respectivement sont prévus pour chaque levier (1,1'), le premier pivot (4a,4a') servant dans une première et une dernière phases de travail (AB-DE figure 5) et le second pivot (4b,4b') servant dans une seconde phase de travail (BD).
